# EUROPEAN PATENT SPECIFICATION

(11) **EP 3 601 944 B1**
(45) Date of publication and mention of the grant of the patent: **14.02.2024**
(21) Application number: 18720000.1
(22) Date of filing: 19.03.2018
(51) Int. Cl.: G01B 5/00, G01B 11/00

(54) **APPARATUS FOR SCANNING A THREE-DIMENSIONAL OBJECT**
VORRICHTUNG ZUR ABTASTUNG EINES DREIDIMENSIONALEN OBJEKTS
APPAREIL DE BALAYAGE D'UN OBJET TRIDIMENSIONNEL

(30) Priority: 23.03.2017 IT 201700032323 U
(43) Date of publication of application: 05.02.2020
(73) Proprietor: V-Ger S.r.l., 40055 Castenaso (Bologna) (IT)
(72) Inventor: LOGOZZO, Silvia, 40055 CASTENASO (BO) (IT); CANELLA, Gabriele, 40055 CASTENASO (BO) (IT)
(74) Representative: Fanzini, Valeriano
(86) International application number: PCT/IB2018/051803
(87) International publication number: WO 2018/172901

(56) References cited:
- KR-A- 20140 115 578
- US-A- 6 055 056
- US-A1- 2001 037 694
- US-A1- 2007 247 639
- US-A1- 2008 007 736
- US-A1- 2016 161 250

## Description

### Technical field

This invention relates to an apparatus for scanning a respective three-dimensional object.

### Background art

Apparatuses are known for scanning a respective three-dimensional object, which comprise means for supporting corresponding means for scanning the three-dimensional object, in particular comprising means, or video camera, for capturing images of the three-dimensional object, and means, or projector, for projecting a corresponding electromagnetic radiation designed to reflect, at least partly, on the three-dimensional object.

More specifically, some of the prior art scanning apparatuses comprise a frame for supporting the scanning means and a turntable, on which is applied the workpiece or three-dimensional object to be scanned. According to another prior art configuration, the scanning apparatuses comprise a supporting frame which, in addition to the turntable, mounts respective scanning means which are movable vertically to allow a scanning of objects of different dimensions from each other.

In any case, the fixed frame scanning apparatuses allow the scanning of objects which have dimensions which differ only slightly from each other and are therefore not very flexible in use.

Moreover, it is also necessary to consider that some three-dimensional objects to be scanned have complex shapes and require, in order to be scanned using prior art apparatuses, removal from the supporting turntable and repositioning, on this, in a different position, in order to allow the capturing of parts of the object which could not be captured with the workpiece in the previous scanning position.

Apparatus according to the state of the art are described in US 2016/161250 and KR 2014 0115578 A.

However, all this is annoying and time-consuming to actuate for the user of the scanning apparatus.

However, the need is felt in the sector to provide an apparatus which operates in a particularly effective manner.

However, the need is felt in the sector to provide an apparatus which can be set up in a particularly fast manner.

However, the need is felt in the sector to provide an apparatus which has a particularly reduced size, at least during the storage and transport. However, the need is felt in the sector to provide an apparatus which is easy to use for the users.

However, the need is felt in the sector to provide an apparatus which is particularly reliable to operate or use.

However, the need is felt in the sector to provide an apparatus which is particularly flexible to operate or use.

The need is also felt in the sector to provide an apparatus which is easy to set up.

However, the need is felt in the sector to provide an apparatus which can operate on a wide range of various products.

### Aim of the invention

The present invention therefore proposes a new and/or alternative solution to the solutions known up to now and, more specifically, proposes to overcome one or more of the above mentioned drawbacks or problems and/or to meet one or more of the needs felt in the trade or inferable from the above.

The invention according provides an apparatus for scanning a respective three-dimensional object according to claim 1.

In this way, it is possible to achieve a considerable range of adjustment of the apparatus and therefore scan objects with dimensions quite variable from each other, in particular progressively increasing, that is to say, with particularly complex shapes.

### Brief description of the drawings

This and other innovative aspects, or specific advantageous features of the invention, are set out in the appended claims, the technical features and advantages of which will become apparent from tho detailed description which follows of preferred advantageous embodiments thereof which however must be considered purely as non-limiting examples on the invention; the description being made with reference to the accompanying drawings, in which;
- Figure 1 shows a perspective view of a first preferred embodiment of the apparatus according to the invention,
- Figure 2 shows a top plan view of the first preferred embodiment of the apparatus according to the invention;
- Figure 3 shows a perspective view of the preferred embodiment of the apparatus according to this invention in an extended condition;
- Figure 4 shows a perspective view of a detail of a part of the first preferred embodiment of the apparatus according to the invention;
- Figure 5 shows a side view of the first preferred embodiment of the apparatus according to the invention;
- Figure 6 shows a top plan view of the first preferred embodiment of the apparatus according to the invention in an extended condition;
- Figure 7 shows a top plan view of a detail of Figure 6 of the first preferred embodiment of the apparatus according to the invention;
- Figure 8A shows a side view of a detail of the means for the supporting the three-dimensional object of the first preferred embodiment of the apparatus according to the invention;
- Figure 8B shows a top plan view of a detail of the means for supporting the three-dimensional object of the first preferred embodiment of the apparatus according to the invention;
- Figure 8C shows a front view of a detail of the means for supporting the three-dimensional object of the first preferred embodiment of the apparatus according to the invention;
- Figure 9A shows a perspective view of a detail of the scanning means of the first preferred embodiment of the apparatus according to the invention;
- Figure 9B shows a top plan view of a detail of the scanning means of the first preferred embodiment of the apparatus according to the invention;
- Figure 10 shows a perspective view of a detail of the scanning means of the first preferred embodiment of the apparatus according to the invention in a different operating condition;
- Figure 11 shows a perspective view of a second preferred embodiment of the apparatus according to the invention, in a fully extended condition;
- Figure 12 shows a top plan view of a detail of the second preferred embodiment of the apparatus according to the invention.

### Detailed description of preferred embodiments of the invention

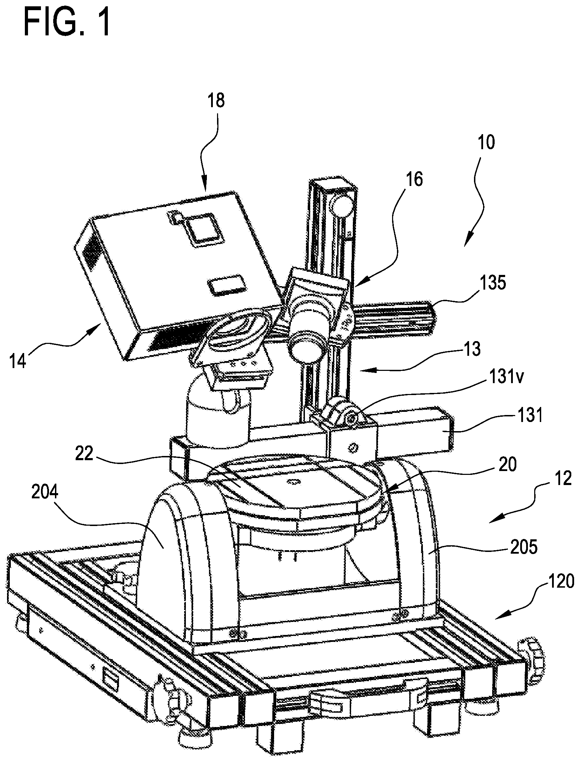

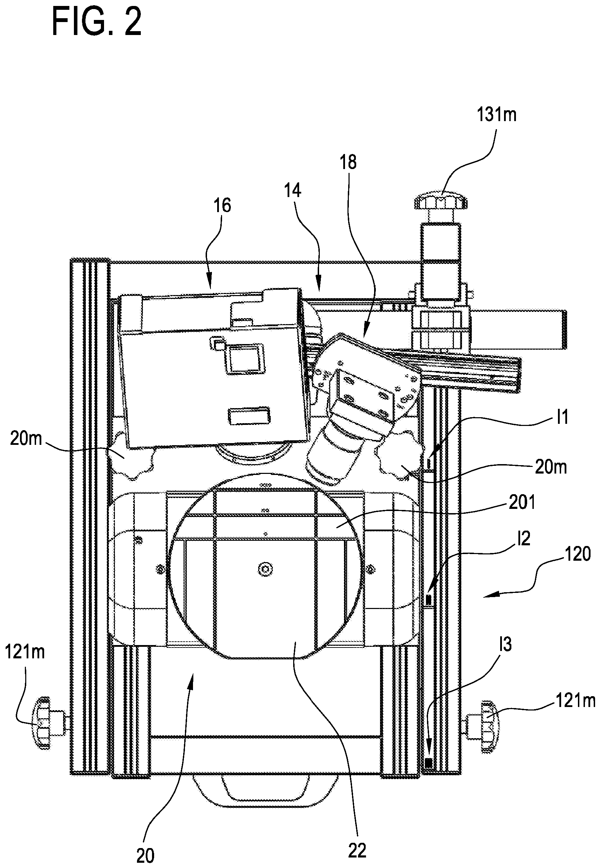

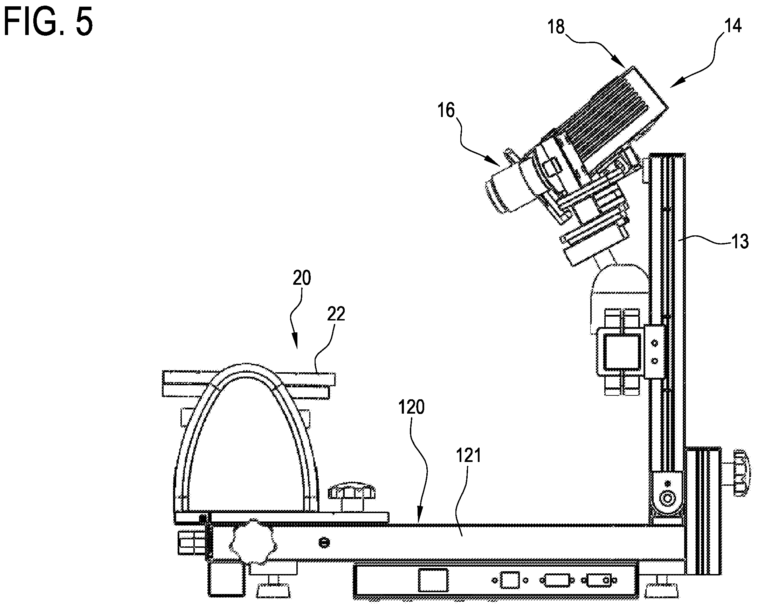

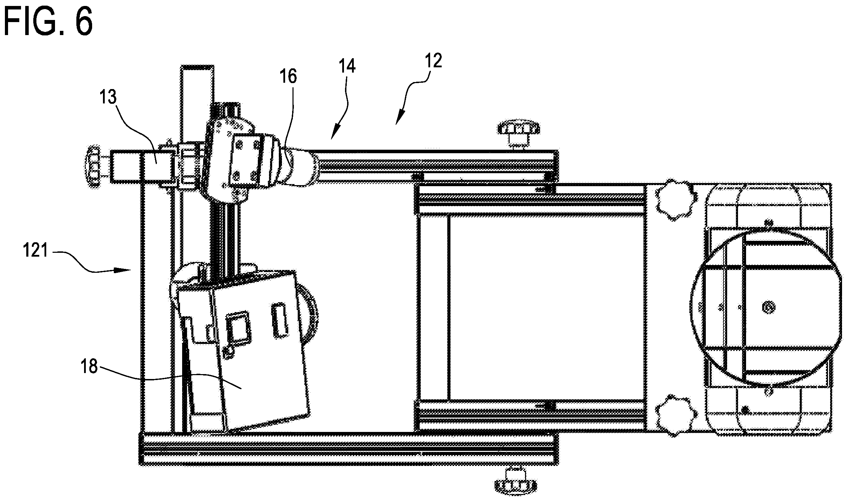

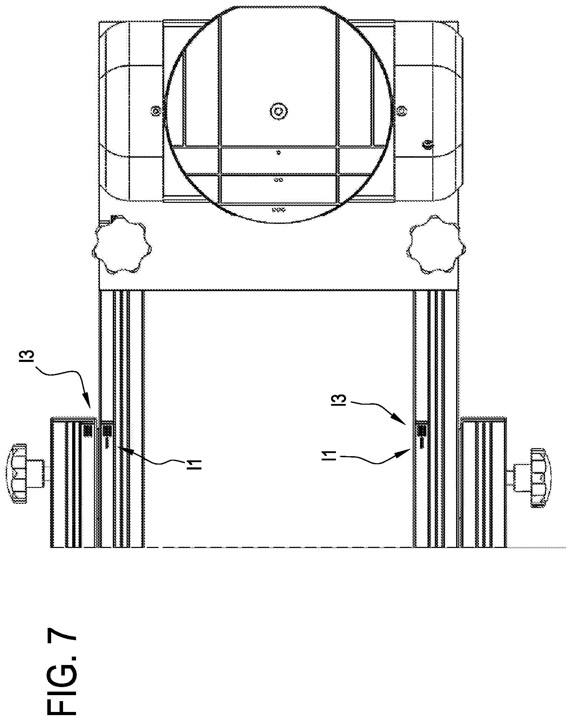

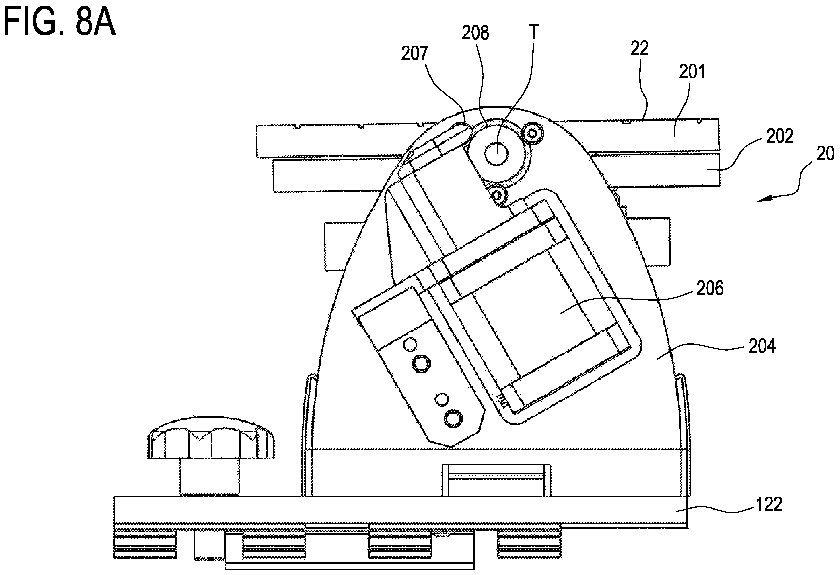

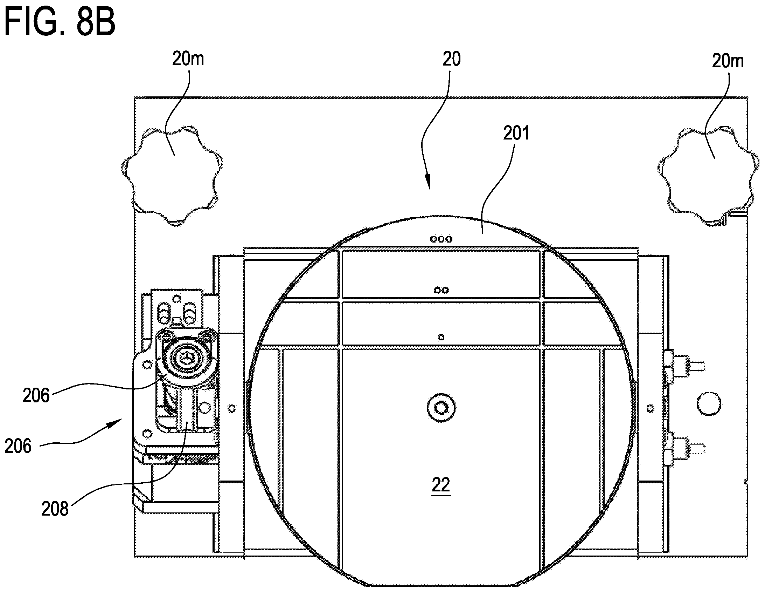

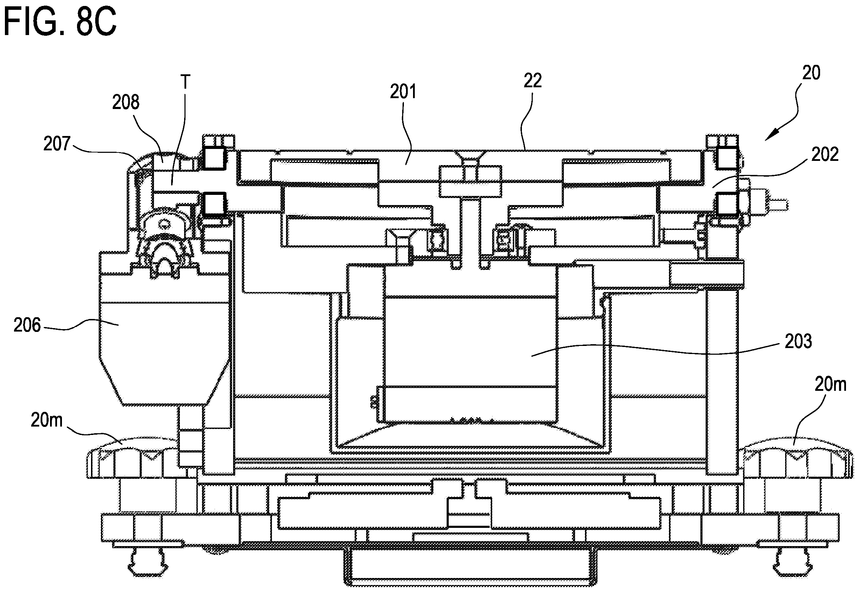

Figures 1 to 10 illustrate a first preferred embodiment of an apparatus 10 for scanning a respective three-dimensional object, the apparatus 10 comprising means 12 for supporting corresponding means 14 for scanning the three-dimensional object, in particular comprising means, or video camera, 16 for capturing images of the three-dimensional object and/or means, or projector, 18 for projecting a corresponding electromagnetic radiation designed to reflect, at least partly, on the three-dimensional object, as well as means 20 for supporting the three-dimensional object, in particular comprising a corresponding surface 22 for fixing the three-dimensional object.

According to the invention, the supporting means 12 define, or allow, between the scanning means 14 and the surface 22 for fixing the three-dimensional object, a connection which comprises a number of degrees of freedom, or relative movement (G1, G2, G4, G7), of the scanning means 14 and/or of the surface 22 for fixing the object, which is greater than or equal to 4, and preferably a number of degrees of freedom which is greater than or equal to 5.

In this way, it is possible to achieve a considerable range of adjustment of the apparatus and therefore scan objects with dimensions quite variable from each other, that is to say, with particularly complex shapes.

More specifically, as illustrated, the body 12 of the supporting means comprises an element 120, as a base or for resting on the ground, which supports the means 20 for supporting the three-dimensional object, from which extends an elevation element 13 which carries the means 14 for scanning the three-dimensional object.

Advantageously, as may be inferred from the drawings, the base element, or element for resting on the ground, is in the form of a frame 120.

Advantageously, as may be inferred from the drawings, the elevation element is in the form of a corresponding column 13 which extends vertically relative to the base element, that is to say, perpendicularly to the frame element 120, extending preferably to a longitudinal end zone, and preferably an edge, of the base element or frame element 120.

Advantageously, the supporting means or body 12 allow the surface 22 for fixing the three-dimensional object a degree of freedom G1 of rotation relative to an axis R perpendicular to the supporting surface 22 and/or, at least, as described in more detail below, in the position of supporting surface not rotated relative to the corresponding transversal axis T, to the base element 120 of the supporting means or body 12.

In this way, it is possible to lum completely by 360° the supporting surface 22, that is to say, the workpiece or three-dimensional object carried on this, and thus capture the entire outer perimeter surface of the workpiece or object.

More specifically, as illustrated, the degree of freedom G1 of rotation relative to the perpendicular axis R. at the supporting surface 22 and/or the base element 120 of the supporting means or body 12, allows a rotation of at least 360°, in particular a continuous rotation according to at least one angular direction.

Advantageously, as may be inferred horn the drawings, the means 20 for supporting the three-dimensional object comprise a turntable 201, defining, with the respective upper face, the supporting surface 22 of the three-dimensional object, the turntable 201 being supported by a corresponding supporting portion 202, in particular in the form of a corresponding table fixed in rotation and in particular provided under the turntable 201, and in particular the supporting portion 202 supporting means for rotating the turntable 201, especially hanging beneath and preferably in the form a respective electric motor 203 for driving the turntable 201.

Advantageously, as may be inferred from the drawings, the supporting means 12 allow the means 14 for scanning the three-dimensional object at least one degree of freedom of perpendicular, or vertical, translation G2, along the elevation element 13. according to both the lifting and lowering directions, relative to the base member 120, that is, relative to the surface 22 for fixing the three-dimensional object.

In this way, it is possible to scan three-dimensional objects with heights significantly different from each other.

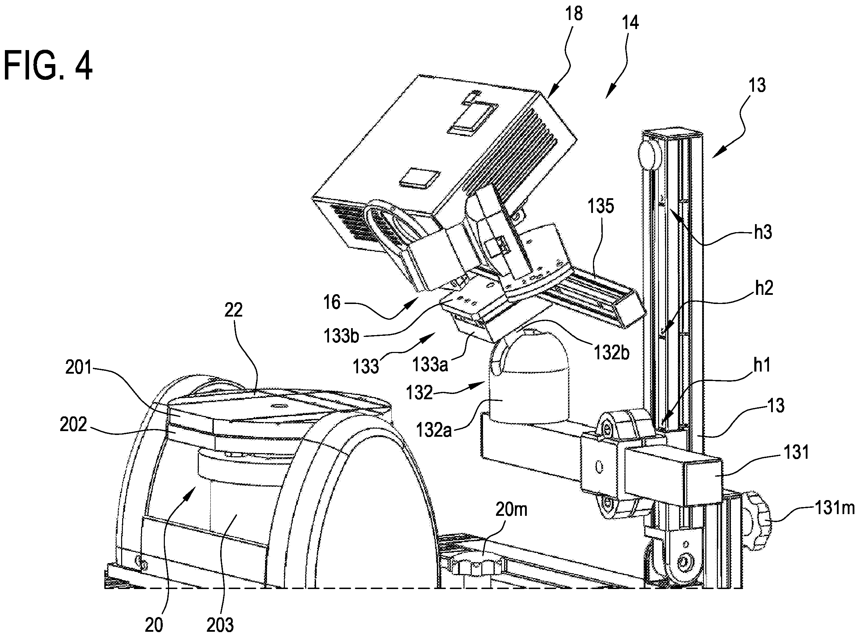

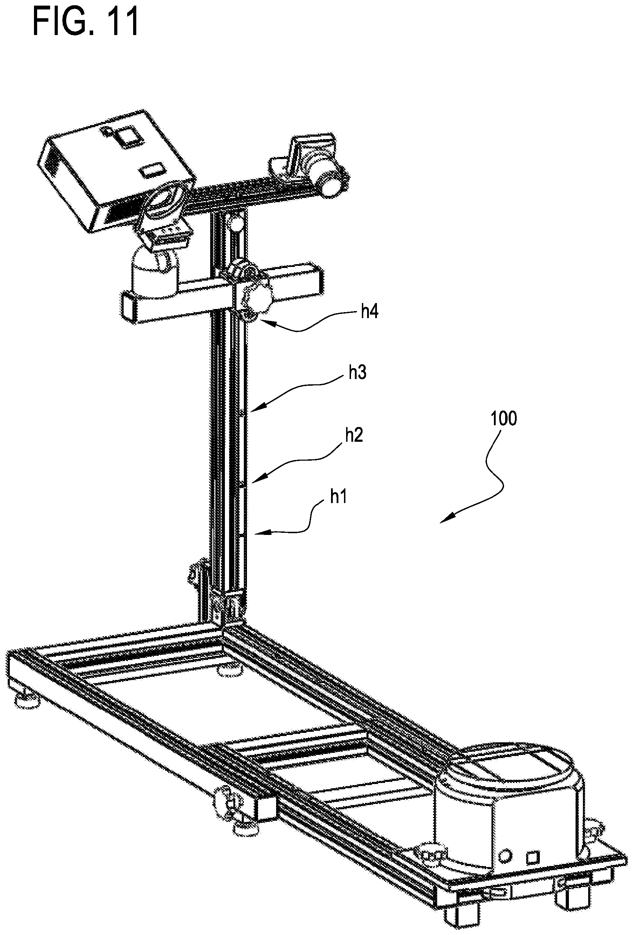

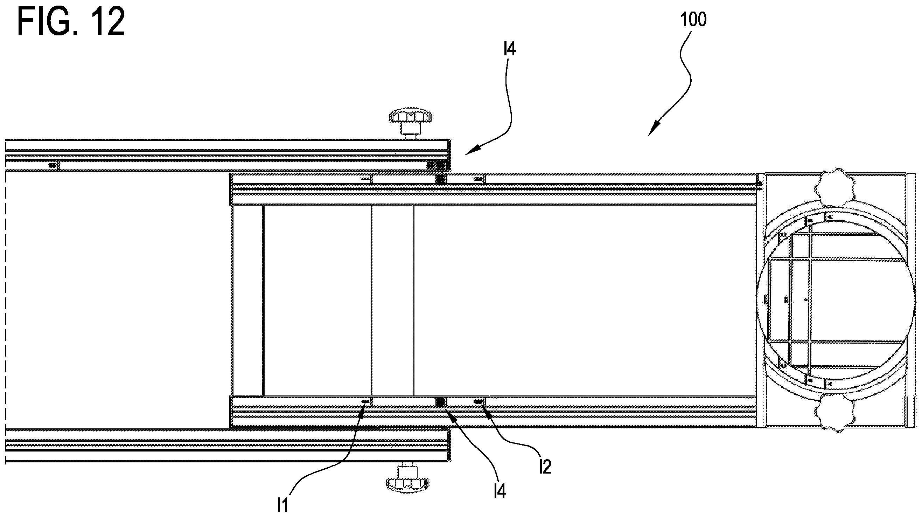

Advantageously, as may be inferred from the drawings, and in particular from Figure 4, the means 14 for scanning the three-dimensional object can be positioned according to the perpendicular, or vertical, degree of freedom G2, in a plurality of predetermined operating positions, in particular comprising a lower position h1, an upper position h3 and at least one position intermediate to these, h2, that is, preferably in an number equal to three or four predetermined operating positions. Advantageously, as may be inferred from Figures 11 and 12, relating to a second preferred embodiment 100 of the scanning apparatus, the means 14 for scanning the three-dimensional object can be positioned according to a perpendicular, or vertical, degree of freedom G2, in a plurality of predetermined operating positions, in particular comprising a lowered or lower position h1, an raised or upper end position h4, and a first and a second position h2, h3 intermediate to these.

Basically, the means 14 for scanning the three-dimensional object can be positioned according to the perpendicular, or vertical, degree of freedom G2, in a plurality of predetermined operating positions, in particular comprising a lower position, a raised end position and at least one position intermediate to these, that is, in a first and a second position intermediate to these, preferably in an number equal to three (for the first preferred embodiment) or four (for the second preferred embodiment) predetermined operating positions h1, h2, h3, h4.

Advantageously, as may be inferred in particular from Figure 4, the predetermined operating positions h1, h2, h3, h4, for perpendicular, or vertical, positioning, of the means 14 for scanning the three-dimensional object, are defined by corresponding notches, provided with respective identification signs, for example defined by a corresponding whole number, in particular the notches being provided on the elevation element 13 which supports the scanning means 14.

In this way, even unskilled personnel can easily and rapidly find the optimum working position for capturing the specific workpiece or three-dimensional object.

Advantageously, as may be inferred from the drawings, the supporting means 12 comprise a crosspiece 131 for supporting the scanning means 14, in particular for supporting the capturing means 16 and/or the projection means 18, the crosspiece 131 being slidable perpendicularly or vertically on the elevation element, or column, 13 and which can be locked to this thanks to respective engagement and disengagement means with the latter, which are not illustrated in detail in the accompanying drawings, and which are in particular actuated through respective knob means 131m. In this way, it is possible to easily disengage, move perpendicularly or vertically, to the new operating position and engage the crosspiece 131 which carries the scanning means with the elevation element or column 13.

Advantageously, as may be inferred from the drawings and in particular from Figure 4, the supporting means 12 allow the means 14 for scanning the three-dimensional object at least one degree of freedom of spherical rotation, that is, rotation on a corresponding ball joint, G3, in particular relative to the supporting crosspiece 132, that is, relative to the surface 22 for fixing the three-dimensional object.

Advantageously, as may be inferred from the drawings and in particular from Figure 4, the degree of freedom of spherical rotation G3 is defined by a corresponding ball joint 132 which supports the scanning means 14, in particular the ball joint 132 being supported by the supporting crosspiece 131, especially at a respective free end of this, the ball joint 132 preferably protruding above the crosspiece 131 and preferably comprising a portion 132a for coupling to the crosspiece 131 and which defines a spherical hinge of movement, by friction, for one end of a corresponding portion 132b which carries the scanning means 14.

In this way, it is possible to adjust the position of the optical axis relative to the supporting surface, that is to say, respective to the workpiece or three-dimensional object

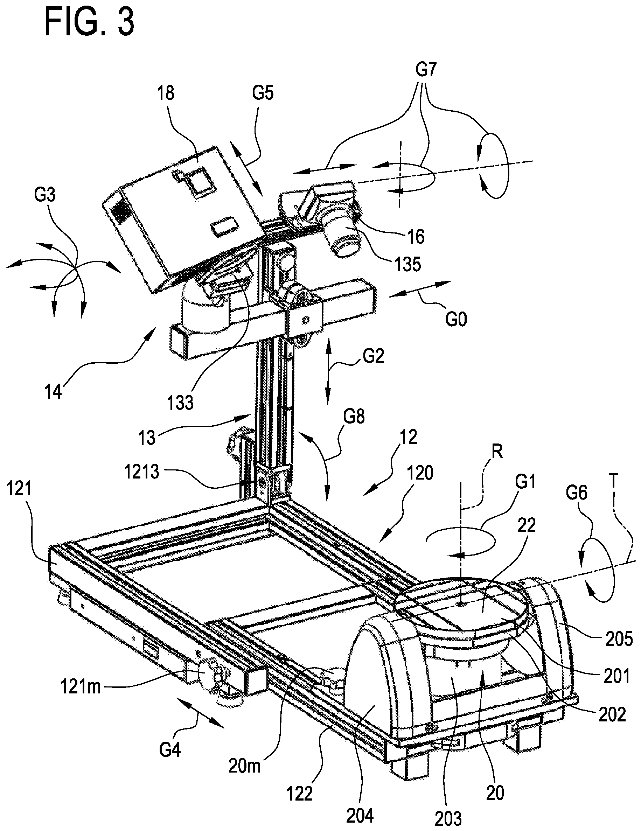

Advantageously, as may be inferred in particular from Figures 1 and 3, the supporting means 12 define at least one degree ol freedom of longitudinal translation G4 according to both the forward and backward directions, of the means 20 for supporting the three-dimensional object, in particular of the respective surface 22 for fixing the latter, relative to the scanning moans 14, that is, relative to the elevation element 13 for supporting the latter.

Advantageously, as may be inferred from the drawings, the base clement, or element for resting on the ground. 120 comprises a base frame 121, from which extends the elevation element 13, and a frame 122 movable relative to the base frame 121, the mobile frame 122 being slidably supported by the base frame 121 and carrying the means 20 for supporting the three-dimensional object.

Advantageously, as may be inferred from the drawings, moreover, the means for supporting the three-dimensional object 20 are also movable relative to the mobile frame 122 of the base element, or element for resting on the ground 120.

Advantageously, as may be inferred from the relative drawings, according to the first preferred embodiment of the apparatus 10, the means 20 for supporting the three-dimensional object, in particular the respective surface 22 for supporting or fixing the three-dimensional object, can be positioned according to the degree of freedom of longitudinal translation G4. in a plurality of predetermined operating positions, in particular comprising a retracted position 11, an elongate end position 13 and a position 12 intermediate to these.

Advantageously, as may be inferred from Figures 11 and 12, according to the second preferred embodiment of the apparatus 100, the means 20 for supporting the three-dimensional object, in particular the respective surface 22 for supporting or fixing the three-dimensional object, can be positioned according to the degree of freedom of longitudinal translation G4, in a plurality of predetermined operating positions, in particular comprising a retracted position I1, an elongate end position I4 and a first and a second position I2, I3 intermediate to these.

Basically, the means 20 for supporting the three-dimensional object, in particular the respective surface 22 for supporting or fixing the three-dimensional object, can be positioned according to the degree of freedom of longitudinal translation G4, in a plurality of predetermined operating positions, in particular comprising a retracted position, an elongate end position, and at least one position intermediate to these, that is to say, preferably in an number equal to three (for the first preferred embodiment) or four (for the second preferred embodiment) predetermined operating positions I1, I2, I3, I4.

The predetermined operating positions 11, I2, I3 I4 for longitudinal positioning of the means 20 for supporting the three-dimensional object, in particular the respective surface 22 for supporting or fixing the three-dimensional object, are defined by corresponding notches 11, I2, I3 I4, provided with respective identification signs, for example defined by a corresponding number, in particular the notches being provided on the base frame 121 and on the frame 122 movable relative to the base frame 121.

In this way, it is possible to scan three-dimensional objects with heights and dimensions significantly different from each other.

Advantageously, as may be inferred from the drawings, the frame 122 movable relative to the base frame 121 can be locked to it, in a respective operating position I1, I2, I3 I4, and unlocked from it, to perform the relative movement towards a different operating position, using corresponding engagement and disengagement means, which are in particular actuated through respective knob means 121m.

Advantageously, as may be inferred from the drawings, the means for supporting the three-dimensional object 20 can be locked relative to the mobile frame 122 of the base element, or element for resting on the ground 120, in a respective operating position I1, I2, I3 I4, and can be unlocked from it, to perform the relative movement towards a different operating position, using corresponding engagement and disengagement means, which are in particular actuated through respective knob means 22m.

In this way, the mobile frame and/or the supporting means of the three-dimensional object may be easily disengaged, moved and engaged in the new operating position.

Advantageously, as may be inferred from the drawings, the supporting means 12 allow at least one degree of freedom of translation G5, in particular according to both the forward and backward directions, of the scanning means 14 with respect to the corresponding supporting ball joint 132.

Advantageously, as may be inferred from Figure 3, the degree of freedom of translation G5 is defined by a corresponding runner 133, in particular comprising a first portion 133a, preferably lower, for fixing to the protruding portion 132b of the ball joint 132 and a second portion, preferably upper 133b, which supports the scanning means 14 and which is mounted in a slidable fashion on the first portion 133a.

Advantageously, as may be inferred in particular from Figure 3, the supporting means 12 allow at least one degree of freedom G6 of rotation of the supporting surface 22 of the three-dimensional object according to a transversal, or horizontal, axis T relative to the supporting means 12, that is, relative to the scanning means 14.

In this way, it is also possible to scan objects which have undercut or recessed parts, without having to remove the workpiece or three-dimensional object from the respective supporting surface for refitting it in a different position.

More specifically, as illustrated, the degree of freedom G6 of rotation of the supporting surface 22 of the three-dimensional object according to a transversal, or horizontal, axis T relative to the supporting means 12, that is, relative to the scanning means 14, is of rotation according to both the opposite angular directions.

Advantageously, as may be inferred from the drawings, the supporting means 12 of the three-dimensional object comprise a block 20 perpendicular in extension, in particular supported by the base frame 120, especially by the mobile frame 122, the block 20 perpendicular in extension defining the surface 22 for supporting and fixing the three-dimensional object, in particular in the form of an upper surface, or surface facing upwards, of the block 20 perpendicular in extension. Advantageously, as may be inferred from the drawings, the block 20 perpendicular in extension comprises arm means perpendicular in extension, in particular including at least a first perpendicular arm, that is preferably, as illustrated, opposite first and second perpendicular arms 204, 205, the arm means 204, 205 in particular rise up and are carried by the base frame 120, that is, by the mobile frame 122, and the arm means 204, 205 carry in a freely rotatable fashion the supporting surface 22 of the three-dimensional object, that is to say, the unit for rotating the supporting surface 22 relative to the perpendicular axis R, and in particular comprising one or more between the following components: turntable 201, table fixed in rotation 202 and motor for actuating rotation 203.

Advantageously, as may be inferred in particular from Figure 3, the degree of freedom G6 of rotation of the supporting surface 22 of the three-dimensional object according to an axis T transversal, or horizontal, to the frame, is provided using corresponding means 206 for rotation, with respect to the a transversal or horizontal axis T, of the supporting surface 22 of the three-dimensional object, that is to say, of the rotation unit, in accordance with the respective perpendicular axis, of the supporting surface 22.

Advantageously, as may be inferred in particular from Figure 3, the means 206 for rotation, with respect to the transversal or horizontal axis T, of the supporting surface 22 of the three-dimensional object, that is to say, of the unit for rotation of the supporting surface 22 relative to the perpendicular axis, comprise a corresponding electric motor 206 which is carried by a respective perpendicular arm 204 of the block 20 which carries the three-dimensional object to be scanned. The drive motor 206 preferably rotates the shaft T which supports the supporting surface 22 of three-dimensional object, that is to say, which supports the unit for rotating the supporting surface 22 in accordance with the respective perpendicular axis, on the arm means 204, 205 of the supporting block 20, and in particular operating through respective transmission means, in particular comprising respective gears 207, 208 integral, respectively, with the shaft of the drive motor 206 and the rotatable supporting shaft T.

Advantageously, as may be inferred in particular from Figure 3, the supporting means 12 allow at least one degree of transversal, or horizontal, freedom G0, in particular according to both directions towards the left and right, between the scanning means 14 and the surface 22 for fixing the three-dimensional object, that is, between the scanning means 14 and the base element 120 and/or the elevation element 14, the transversal translation being especially designed to define the centring of the optical axis of the video camera 16 of the scanning means 14 relative to the surface for supporting and fixing the three-dimensional object. Advantageously, as may be inferred from the drawings, the crosspiece 131 for supporting the scanning means 14 is movable transversally relative to the elevation element, or column, 13 and can be locked to this thanks to respective engagement and disengagement means with the latter, which are in particular actuated through respective screw means 131v.

In this way, the transversal adjustment may be performed by the manufacturer and prevents it from being inappropriately performed by the user of the apparatus

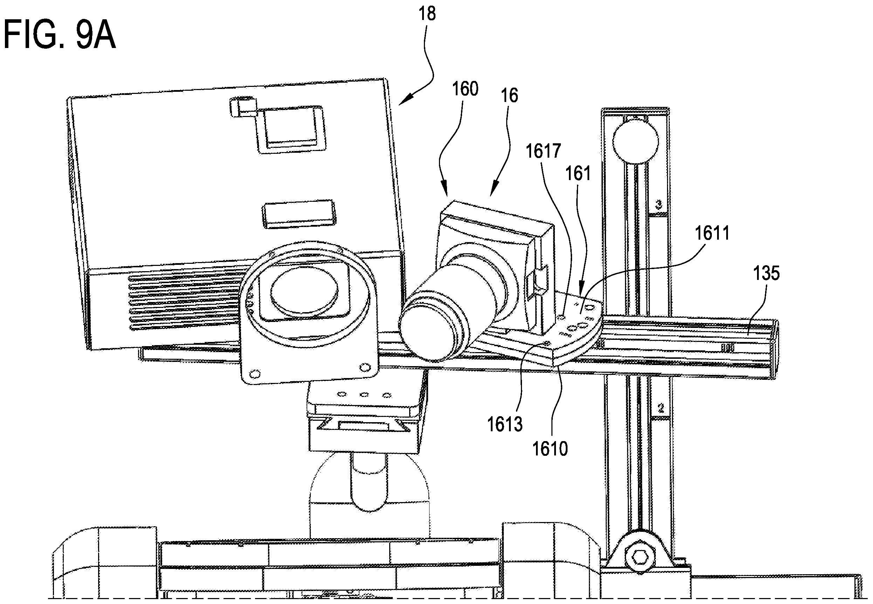

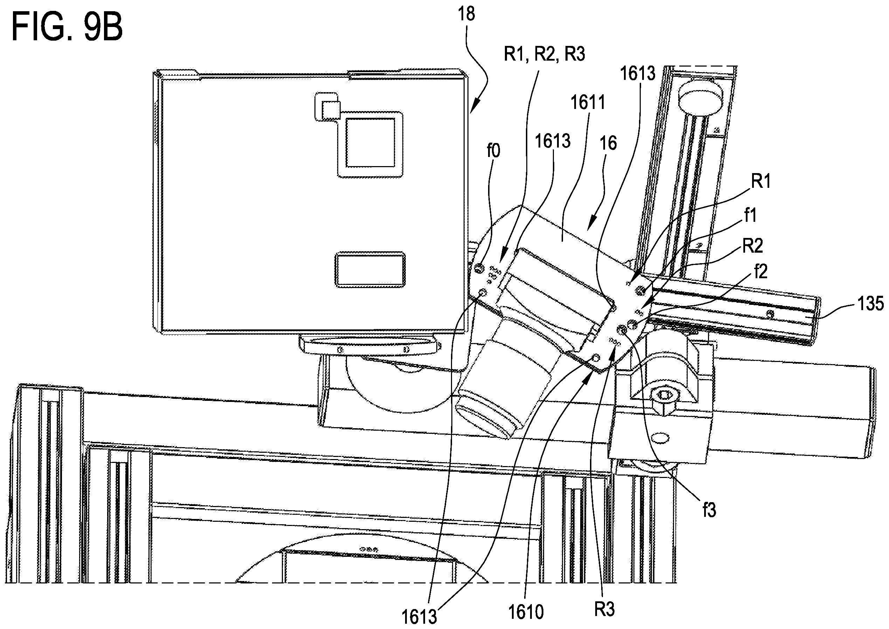

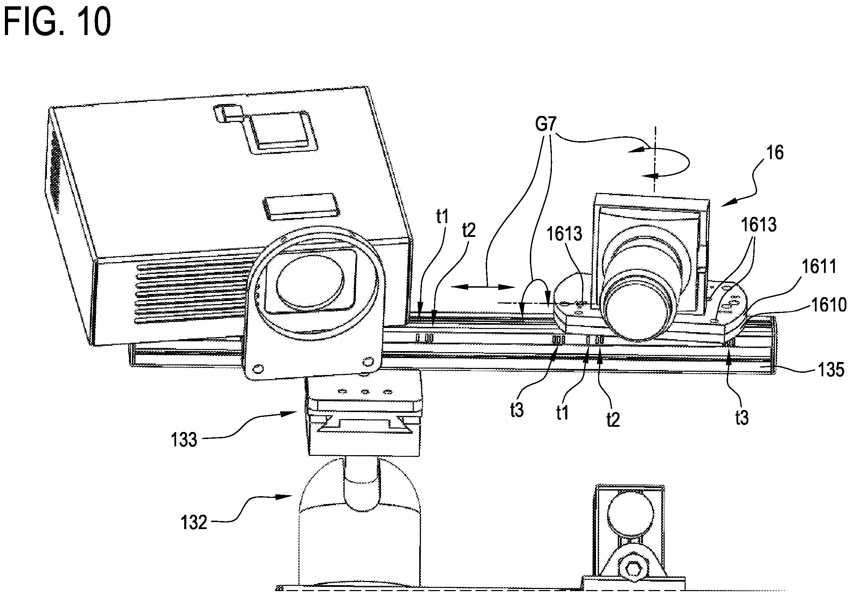

Advantageously, as may be inferred from the drawings, and in particular from Figures 9A, 9B and 10, the supporting means 12 allow at least one degree of freedom G7 between the means, or video camera 16 for capturing images of the three-dimensional object and the projection means, or the projector 18, and in particular of the capturing means, or video camera, 16 relative to the projection means, or projector 18.

Advantageously, as may be inferred from the drawings, and in particular from Figures 3, 9A, 9B and 10, the degree of freedom G7, between the means, or video camera, 16 for capturing images of the three-dimensional object and the projection means, or projector, 18, comprises a transversal, or horizontal, translation away from or towards, in particular of the capturing means, or video camera, 16 relative to the projection means, or projector, 18, and/or an angular rotation according to a respective perpendicular, or vertical, axis, however not illustrated in detail in the accompanying drawings, in particular of the capturing means, or video camera, 16 relative to the projection means, or projector, 18 and/or an angular rotation according to a respective transversal axis to the capturing means, or video camera, 16, in particular defined by a respective horizontal axis, and especially in the form of an angular rotation of the capturing means, or video camera, 16 relative to the projection means, or projector, 18, that is, with respect to the corresponding supporting means 135.

Advantageously, as may be inferred from Figures 9A, 9B and 10, the degree of freedom G7 between the means, or video camera, (16) for capturing images of the three-dimensional object and the projection means, or projector, 18 of a corresponding electromagnetic radiation, allows a transversal, or horizontal, translation into a plurality of predetermined operating positions, in particular comprising a close position t1, a far position t3 and at least one position t2 intermediate to these, that is, preferably in a number equal to three predetermined translational operating positions; and/or a rotation of the capturing means, or video camera, 16 in a plurality of predetermined operating positions, in particular comprising a rotated position r1, of minimum convergence between the optical axes of the projection means, or video camera, 16 for capturing and projection means, or projector, 18, a rotated position r3 of maximum convergence between the optical axes of the capturing means, or video camera, 16 and projection means, or projector, 18, and at least one rotated position r2 intermediate between these, that is, preferably in a number equal to three predetermined rotational operating positions.

Advantageously, with reference to the second preferred embodiment 100 of Figures 11 and 12, the degree of freedom G7 between the means, or video camera, 16 for capturing images of the three-dimensional object and the projection means, or projector, 18 of a corresponding electromagnetic radiation, allows a transversal, or horizontal, translation into a plurality of predetermined operating positions, in particular comprising a close position, a far position and a first and a second position intermediate to these, that is, preferably in a number equal to four predetermined translational operating positions; and/or a rotation of the capturing means, or video camera, 16 in a plurality of predetermined operating positions, in particular comprising a rotated position, of minimum convergence between the optical axes of the projection means, or video camera, 16 for capturing and projection means, or projector, 18, a rotated position of maximum convergence between the optical axes of the capturing means, or video camera, 16 and projection means, or projector, 18, and a first and a second rotated position intermediate to these, that is, preferably in a number equal to four predetermined rotational operating positions.

Advantageously, as may be inferred from Figures 9A, 9B and 10, in relation to the degree of freedom G7 between the means, or video camera 16 for capturing images of the three-dimensional object and the means, or the projector, 18 for projection of a corresponding electromagnetic radiation, the close position t1 between the capturing means, or video camera, 16 and the projection means, or projector, 18 coincides with the rotated position r1, of minimum convergence between the optical axes of the capturing means, or video camera, 16 and the projection means, or projector, 18; the far position t3 between the capturing means, or video camera, 16 and the projection means, or projector, 18 coincides with the rotated position r3, of maximum convergence between the optical axes of the capturing means, or video camera, 16 and the projection means, or projector, 18; and the respective intermediate position, in particular t2, between the capturing means, or video camera, 16 and the projection means, or projector, 18 coincides with the respective intermediate rotated position, in particular r2, between the angular positions of minimum and maximum convergence between the optical axes of the capturing means, or video camera, 16 and the projection means, or projector, 18.

Advantageously, as may be inferred from the drawings, the supporting means 12 comprise a rod 135 for supporting the scanning means (14), in particular for combined supporting of the means, or video camera (16) for capturing images of the three-dimensional object and/or projection means, or projector, 18; preferably, the supporting rod 135 being carried by the elevation element, or column, 13 and in particular by the crosspiece 131, which is carried by the elevation element, or column, 13, preferably through the ball joint 132 and the runner 133, at the upper part 133b of which the rod 135 is fixed.

Advantageously, as may be inferred from the drawings, the supporting means 12 comprise a plate 161 for supporting the capturing means, or video camera, 160, the supporting plate 161 being in particular supported and preferably connected in an manner which can be engaged and disengaged, in particular by respective screws, to the rod 135 supporting the scanning means 14.

More specifically, as may be inferred in particular from Figures 9A to 10, the plate 161 for supporting the capturing means, or video camera, 16, is composed of a lower plate 1610 for engagement and coupling, to the respective supporting means, that is, to the transversal supporting rod 135, and an upper plate 1611, which directly supports the capturing means, or video camera, 16 and which is supported by the lower plate 1610 and rotatable angularly relative to the latter, according to a respective axis transversal to the capturing means, or video camera, 16, in particular defined by a respective horizontal axis, to allow the corresponding angular rotation of the capturing means, or video camera, 16 relative to the projection means, or projector, 18.

Advantageously, there are means, in particular in the form of corresponding adjustment screws 1613 which allow adjustment of the angular position of the capturing means, or video camera, (16), relative to a corresponding transversal axis, in particular horizontal, and especially which allow adjustment of the angular position of the upper plate 1611, which directly supports the capturing means, or video camera, 16 relative to the lower plate 1610 for coupling to the supporting means 12, that is, to the respective transversal rod 135.

Advantageously, as may be inferred from the drawings, the predetermined operating positions t1, t2, t3 for translated positioning between the means, or video camera, 16 for capturing images of the three-dimensional object and the means, or projector, 18 for projecting a corresponding electromagnetic radiation, are defined by corresponding notches, in particular by pairs of notches which indicate the corresponding coupling ends of the capturing means, that is to say, for coupling the plate 161 for supporting the capturing means 160, the notches being provided with respective identification signs, for example defined by a corresponding whole number, and in particular they are, with advantage, provided on the rod 135 for combined supporting of the means, or video camera, 16 for capturing images of the three-dimensional object and the means, or projector 18 for projection of a corresponding electromagnetic radiation.

Advantageously, as may be inferred from the drawings, the predetermined operating positions r1, r2, r3, for rotated positioning, between the means, or video camera, 16 for capturing images of the three-dimensional object and the means, or projector 18 for projection of a corresponding electromagnetic radiation, are defined by corresponding notches, in particular by pairs of notches, which indicate corresponding coupling ends of the capturing means 16, that is, of the respective supporting plate 161, which are provided with respective identification signs, in particular the notches, or pairs of notches, are provided on the plate 161 for supporting the capturing means 16.

Advantageously, as may be inferred from the drawings, and in particular from Figure 9B, the notches, or pairs of notches, which are provided on the plate 161 for supporting the capturing means, or video camera, 160, denote corresponding holes f0, f1, f2, f3 for insertion of respective fastening bolts provided in the supporting plate 161. more specifically, the pairs of notches comprise a respective common notch at a single hole f0, which is at one end of the capturing means 16, that is, at the end the capturing means 16 which faces the projection means, or projector, 18, and a plurality of notches at the opposite end of the capturing means 16, the notches at the opposite end being located at respective holes f1, f2, f3 which are angularly spaced from each other and which define the respective angular positions of the capturing means 16.

In this way, even unskilled personnel can easily and rapidly find the optimum working position for capturing the specific workpiece or three-dimensional object.

Advantageously, the elevation element 13, which carries the means 14 for scanning the three-dimensional object, has, relative to the base element, or element for resting on the ground, 120, supporting the means 20 for supporting the three-dimensional object, at least one degree of freedom G8 for positioning the elevation element 13 in the rest position, in particular in the position of transport of the apparatus.

More specifically, as illustrated, the degree of freedom G8 for positioning the elevation element 13 in the rest position, especially in the transport position, of the apparatus, is defined by a relative rotation between the elevation element 13 and the base element, or the element for resting on the ground, 120, preferably by an angle substantially equal to 90°. Advantageously, although not illustrated in the accompanying drawings, in the rest position, especially in the transport position, of the apparatus, the element which carries the means 14 for scanning the three-dimensional object is positioned above the base element, or element for resting on the ground, 120.

Advantageously, as may be inferred from the drawings, the elevation element, or column, 13 which carries the means 14 for scanning the three-dimensional object is connected to the base element, or element for resting on the ground, 120, supporting the means 20 for supporting the three-dimensional object, through a respective rotation hinge 1213, in particular which allows the rotation of the elevation element, or column, 13 towards the base element, or element for resting on the ground, 120.

Advantageously, as may be inferred from the drawings, the hinge 1213 of rotation of the elevation element, or column, 13 relative to the base element, or element for resting on the ground, 120, is situated at the respective end, in particular lower end, connecting the elevation element, or column, 13 to the base element, or element for resting on the ground, 120.

Advantageously, although not illustrated in detail in the accompanying drawings, there are means for connection to the control and electronic processing means, that is, computer means, in particular outside the apparatus and connectable thereto.

Moreover, although not illustrated in detail in the accompanying drawings, there are means for connection to electricity supply means, for actuating various components or operating means of the apparatus.

Advantageously, according to a further preferred embodiment not illustrated in the accompanying drawings, the apparatus comprises computer means or electronic processing means, which process the data measured and control the corresponding operating means of the apparatus, the computer means, in particular, are directly supported by the supporting means 12 of the apparatus. The computer means are therefore directly connected to the corresponding components or operating means of the apparatus to be controlled.

In practice, as is evident, the technical features described above allow the present invention, individually or in respective combination, to achieve one or more of the following advantageous results:
- achieving the scanning of objects which have dimensions which are quite different from each other;
- achieving the scanning of objects which have complex shapes;
- providing an apparatus which operates in a particularly effective manner;
- providing an apparatus which can be set up in a particularly fast manner;
- providing an apparatus which has a particularly reduced size, at least during the storage and transport steps;
- providing an apparatus which is easy to use for the users;
- providing an apparatus which is particularly flexible to operate or use;
- providing an apparatus which can operate on a wide range of various products.

The invention described has evident industrial applications. It would be obvious to one skilled in the art that several changes and modifications can be made to the invention without departing from the scope of the invention, the scope of protection being defined by the appended claims.

## Claims

1. An apparatus (10) for scanning a respective three-dimensional object; comprising first supporting means (12) for supporting corresponding means (14) for scanning the three-dimensional object and second means (20) for supporting the three-dimensional object, said second means (20) comprising a corresponding surface (22) for fixing the three-dimensional object; said first supporting means being in the form of a respective body (12) configured to support both the means (14) for scanning the three-dimensional object and the means (20) for supporting the three-dimensional object; said body (12) of the supporting means comprising an element (120), as a base or for resting on the ground, which is configured to support the second means (20) for supporting the three-dimensional object;
the apparatus further comprising an elevation element (13) configured to carry the means (14) for scanning the three-dimensional object, whereby the elevation element (13) extends from said element (120); and said first supporting means or body (12) allowing the surface (22) for fixing the three-dimensional object a degree of freedom (G1) of rotation relative to an axis (R) perpendicular to the supporting surface (22) and/or to the base element (120) of the supporting means or body (12); said means (14) for scanning the three-dimensional object comprise means, or video camera, (16) for capturing images of the three-dimensional object and means, or projector, (18) for projecting a corresponding electromagnetic radiation designed to reflect, at least partly, on the three- dimensional object; the first supporting means (12) being configured to allow the means (14) for scanning the three-dimensional object at least one degree of freedom of perpendicular, or vertical, translation (G2), preferably along the elevation element (13), according to both the lifting and lowering directions, relative to the base member (120), that is, relative to the surface (22) for fixing the three-dimensional object; the first supporting means (12) being configured to further define at least one degree of freedom of longitudinal translation (G4), according to both the forward and backward longitudinal directions, of the second means (20) for supporting the three-dimensional object, in particular of the respective surface (22) for fixing the latter, relative to the scanning means (14), that is, relative to the elevation element (13) for supporting the latter; **characterised in that** the supporting means (12) is further configured to allow at least one degree of freedom (G7) between the means, or video camera, (16) for capturing images of the three-dimensional object and the projection means, or the projector (18), and in particular of the capturing means, or video camera, (16) relative to the projection means, or projector (18).

2. The apparatus according to claim 1, **characterised in that** the elevation element is in the form of a corresponding column (13) which extends vertically relative to the base element, that is to say, perpendicularly to the frame element (120), extending preferably to a longitudinal end zone, and preferably an edge, of the base element or frame element (120).

3. The apparatus according to any one of the preceding claims, **characterised in that** the degree of freedom (G1) of rotation relative to the perpendicular axis (R), at the supporting surface (22) and/or the base element (120) of the first supporting means or body (12), allows a rotation of at least 360°, in particular a continuous rotation according to at least one angular direction.

4. The apparatus according to any one of the preceding claims, **characterised in that** the second means (20) for supporting the three-dimensional object comprise a turntable (201), defining, with the respective upper face, the supporting surface (22) of the three-dimensional object, the turntable (201) being supported by a corresponding supporting portion (202), in particular in the form of a corresponding table fixed in rotation and in particular provided under the turntable (201), and in particular the supporting portion (202) supporting means for rotating the turntable (201), especially hanging beneath and preferably in the form a respective electric motor (203) for driving the turntable (201).

5. The apparatus according to any one of the preceding claims, **characterised in that** the means (14) for scanning the three-dimensional object can be positioned according to the perpendicular, or vertical, degree of freedom (G2), in a plurality of predetermined operating positions, in particular comprising a lower position (hi), an upper position (h3 or h4) and at least one position intermediate to these, (h2), that is, in a first and a second intermediate position to these (h2 and h3), preferably in an number equal to three or four predetermined operating positions.

6. The apparatus according to any one of the preceding claims, **characterised in that** the first supporting means (12) comprise a crosspiece (131) for supporting the scanning means (14), in particular for supporting the capturing means (16) and/or the projection means (18), the crosspiece (131) being slidable perpendicularly or vertically on the elevation element, or column, (13) and which can be locked to this thanks to respective engagement and disengagement means with the latter, which are in particular actuated through respective knob means (131m).

7. The apparatus according to any one of the preceding claims, **characterised in that** the first supporting means (12) allow the means (14) for scanning the three-dimensional object at least one degree of freedom of spherical rotation (G3), in particular relative to the supporting crosspiece (132), that is, relative to the surface (22) for fixing the three-dimensional object; and in particular **in that** the degree of freedom of spherical rotation (G3) is defined by a corresponding ball joint (132) which supports the scanning means (14), in particular the ball joint (132) is supported by the supporting crosspiece (131), especially at a respective free end of this, the ball joint (132) preferably protruding above the crosspiece (131) and preferably comprising a portion (132a) for coupling to the crosspiece (131) and which defines a spherical hinge of movement, by friction, for one end of a corresponding portion (132b) which carries the scanning means (14).

8. The apparatus according to one of the preceding claims, **characterised in that** the base element, or element for resting on the ground, (120) comprises a base frame (121), from which extends the elevation element (13), and a frame (122) movable relative to the base frame (121), the mobile frame (122) being slidably supported by the base frame (121) and carrying the means (20) for supporting the three- dimensional object.

9. The apparatus according to claim 8, **characterised in that** the second means for supporting the three-dimensional object (20) are movable relative to the mobile frame (122) of the base element, or element for resting on the ground (120).

10. The apparatus according to any one of the preceding claims 8 and 9, **characterised in that** the frame (122) movable relative to the base frame (121) can be locked to it, in a respective operating position (11, I2, I3 I4), and unlocked from it, to perform the relative movement towards a different operating position, using corresponding engagement and disengagement means, which are in particular actuated through respective knob means (121 m); and/or **in that** the means for supporting the three-dimensional object (20) can be locked relative to the mobile frame (122) of the base element, or element for resting on the ground (120), in a respective operating position (11, 12, I3 I4), and can be unlocked from it, to perform the relative movement towards a different operating position, using corresponding engagement and disengagement means, which are in particular actuated through respective knob means (22m).

11. The apparatus according to any one of the preceding claims, **characterised in that** the first supporting means (12) allow at least one degree of freedom of translation (G5), in particular according to both the forward and backward directions, of the scanning means (14) with respect to the corresponding supporting ball joint (132).

12. The apparatus according to any one of the preceding claims, **characterised in that** the first supporting means (12) allow at least one degree of freedom (G6) of rotation of the supporting surface (22) of the three-dimensional object according to a transversal, or horizontal, axis (T) relative to the supporting means (12), that is, relative to the scanning means (14); and in particular **in that** the degree of freedom (G6) of rotation of the supporting surface (22) of the three-dimensional object according to a transversal, or horizontal, axis (T) relative to the supporting means (12), that is, relative to the scanning means (14), is of rotation according to both the opposite angular directions.

13. The apparatus according to any one of the preceding claims, **characterised in that** the first supporting means (12) allow at least one degree of transversal, or horizontal, freedom (GO), in particular according to both directions towards the left and right, between the scanning means (14) and the surface (22) for fixing the three- dimensional object, that is, between the scanning means (14) and the base element (120) and/or the elevation element (14), the transversal translation being especially designed to define the centring of the optical axis of the video camera (16) of the scanning means (14) relative to the surface for supporting and fixing the three-dimensional object.

14. The apparatus according to any one of the preceding claims, **characterised in that** the elevation element (13), which carries the means (14) for scanning the three- dimensional object, has, relative to the base element, or element for resting on the ground, (120), supporting the means (20) for supporting the three-dimensional object, at least one degree of freedom (G8) for positioning the elevation element (13) in the rest position, in particular in the position of transport of the apparatus; in particular that the degree of freedom (G8) for positioning the elevation element (13) in the rest position, especially in the transport position, of the apparatus, is defined by a relative rotation between the elevation element (13) and the base element, or the element for resting on the ground, (120), preferably by an angle substantially equal to 90°, and/or in particular **in that**, in the rest position, especially in the transport position, of the apparatus, the element which carries the means (14) for scanning the three-dimensional object is positioned above the base element, or element for resting on the ground, (120).

15. The apparatus according to any one of the preceding claims, **characterised in that** the degree of freedom (G7), between the means, or video camera, (16) for capturing images of the three-dimensional object and the projection means, or projector, (18), comprises a transversal, or horizontal, translation away from or towards, in particular of the capturing means, or video camera, (16) relative to the projection means, or projector, (18), and/or an angular rotation according to a respective perpendicular, or vertical, axis in particular of the capturing means, or video camera, (16) relative to the projection means, or projector, (18) and/or an angular rotation according to a respective transversal axis to the capturing means, or video camera, (16), in particular defined by a respective horizontal axis, and especially in the form of an angular rotation of the capturing means, or video camera, (16) relative to the projection means, or projector (18).

## Patentansprüche

1. Vorrichtung (10) zum Scannen eines jeweiligen dreidimensionalen Objekts, umfassend erste Stützmittel (12) zum Stützen von entsprechenden Mitteln (14) zum Scannen des dreidimensionalen Objekts und zweite Mittel (20) zum Stützen des dreidimensionalen Objekts, wobei die zweiten Mittel (20) eine entsprechende Oberfläche (22) zum Fixieren des dreidimensionalen Objekts umfassen, wobei die ersten Stützmittel die Form eines jeweiligen Körpers (12) haben, der so konfiguriert ist, dass er sowohl die Mittel (14) zum Scannen des dreidimensionalen Objekts und die Mittel (20) zum Stützen des dreidimensionalen Objekts, stützt, wobei der Körper (12) der Stützmittel ein Element (120), als Basis oder zum Aufliegen auf dem Boden, umfasst, das zum Stützen der zweiten Mittel (20) zum Tragen des dreidimensionalen Objekts, konfiguriert ist; wobei die Vorrichtung weiterhin ein Hebeelement (13) umfasst, das zum Tragen der Mittel (14) zum Scannen des dreidimensionalen Objekts konfiguriert ist, wobei sich das Hebeelement (13) von dem Element (120) aus erstreckt und die ersten Stützmittel oder der Körper (12) der Oberfläche (22) gestatten, das dreidimensionales Objekt mit einem Rotationsfreiheitsgrad (G1) in Bezug auf eine Achse (R), zu fixieren, die senkrecht zur Stützoberfläche (22) verläuft und/oder an dem Basiselement (120) des Stützmittels bzw. des Körpers (12), wobei die Mittel (14) zum Scannen des dreidimensionalen Objekts Mittel, oder eine Videokamera (16) aufweisen, zur Erfassung von Bildern des dreidimensionalen Objekts und Mittel, oder einen Projektor (18) aufweisen, zum Projizieren einer entsprechenden elektromagnetischen Strahlung, die dazu bestimmt ist, zumindest teilweise auf dem dreidimensionalen Objekt zu reflektieren, wobei die ersten Trägermittel (12) so konfiguriert sind, dass sie den Mittel (14) zum Scannen des dreidimensionalen Objekts mindestens einen Translationsfreiheitsgrad (G2) ermöglichen, der sich senkrecht oder vertikal, vorzugsweise entlang des Hebeelements (13), sowohl in Hebe- als auch in Senkrichtung, in Bezug auf das Basiselement (20), d. h. in Bezug auf die Oberfläche (22), erstreckt, um das dreidimensionale Objekt zu fixieren, wobei die ersten Stützmittel (12) so konfiguriert sind, dass sie weiterhin mindestens einen Freiheitsgrad der Längsverschiebung (G4) entsprechend den Längsrichtungen nach vorn und nach hinten weisend, des zweiten Mittels (20) zum Tragen des dreidimensionalen Objekts, insbesondere der jeweiligen Oberfläche (22), definieren, zu dessen Fixierung, gegenüber dem Aufnahmemittel (14), d.h. gegenüber dem Hebeelement (13) zur Abstützung letzterer, **dadurch gekennzeichnet, dass** die Stützmittel (12) außerdem so konfiguriert sind, dass sie mindestens einen Freiheitsgrad (G7) zwischen den Mitteln, oder eine Videokamera (16) zum Aufnehmen von Bildern der dreidimensionalen Objekts, aufweist, und die Projektionsmittel, oder den Projektor (18), und insbesondere Detektionsmittel, oder eine Videokamera (16), in Bezug auf das Projektionsmittel, oder Projektor (18), aufweist.

2. Vorrichtung nach Anspruch 1, **dadurch gekennzeichnet, dass** das Hubelement die Form einer entsprechenden Säule (13) aufweist, die sich vertikal zum Basiselement, d.h. senkrecht zum Rahmenelement (120), vorzugsweise in Richtung eines Längsendbereichs und vorzugsweise einer Kante des Basiselements oder Rahmenelements (120), erstreckt.

3. Vorrichtung nach einem der vorhergehenden Ansprüche, **dadurch gekennzeichnet, dass** der Rotationsfreiheitsgrad (G1) bezüglich der senkrechten Achse (R), auf der Stützfläche (22) und/oder dem Basiselement (120) der ersten Stützmittel bzw. des Körpers (12), eine Drehung um mindestens 360°, insbesondere eine kontinuierliche Drehung entsprechend mindestens einer Winkelrichtung, ermöglicht.

4. Vorrichtung nach einem der vorhergehenden Ansprüche, **dadurch gekennzeichnet, dass** die zweiten Mittel (20) zum Tragen des dreidimensionalen Objekts einen Drehtisch (201) umfassen, der mit der jeweiligen Oberseite die Stützfläche (22) des dreidimensionalen Objekts definiert, wobei der Drehtisch (201) von einem entsprechenden Stützteil (202) getragen wird, insbesondere mit der Form eines korrespondierenden, drehfesten Tisches und insbesondere unterhalb des Drehtisches (201) angeordnet ist, und in insbesondere trägt das Stützteil (201) Mittel zum Drehen des Drehtisches (201), insbesondere die, vorzugsweise in Form eines entsprechenden Elektromotors (203) zum Antrieb des Drehtisches (201), eingehängt sind.

5. Vorrichtung nach einem der vorhergehenden Ansprüche, **dadurch gekennzeichnet, dass** die Mittel (14) zum Scannen des dreidimensionalen Objekts entsprechend dem Freiheitsgrad (G2) senkrecht, bzw. vertikal, in mehreren vorfestgelegten Betriebspositionen, insbesondere einschließlich einer niedrigeren Position (h1), einer höheren Position (h3 oder h4), und mindestens einer Zwischenstellung (h2) zu diesen, d.h. einer ersten und zweiten Zwischenstellung (h2 und h3) zu diesen, vorzugsweise in einer Anzahl von drei oder vier vorab festgelegten Betriebsstellungen, positioniert werden könne.

6. Vorrichtung nach einem der vorhergehenden Ansprüche, **dadurch gekennzeichnet, dass** die ersten Stützmittel (12) ein Stützkreuz (131) zur Stützung der Aufnahmemittel (14), insbesondere zur Stützung der Detektionsmittel (16) und/oder der Projektionsmittel (18) umfassen, wobei das Stützkreuz (131) senkrecht oder vertikal auf dem Hebeelement bzw. der Säule (13) verschiebbar ist und mittels entsprechender Kopplungs- und Entkopplungsmittel mit letzterer verriegelbar ist, die insbesondere über entsprechende Mittel mit Knöpfen (131m) betreibbar sind.

7. Vorrichtung nach einem der vorhergehenden Ansprüche, **dadurch gekennzeichnet, dass** die ersten Stützmittel (12) den Mitteln (14) zum Scannen des dreidimensionalen Objekts mindestens einen Freiheitsgrad von einer kugeligen Drehung (G3) ermöglichen, insbesondere bezüglich des Stützkreuzes (132), d.h. bezüglich der Oberfläche (22) zur Fixierung des dreidimensionalen Objekts, und insbesondere, dass der Freiheitsgrad der kugeligen Rotation (G3) durch ein entsprechendes Kugelgelenk (132) definiert ist, welches die Aufnahmemittel (14) trägt, insbesondere wobei das Kugelgelenk (132) durch das Stützkreuz (131), insbesondere an einem jeweiligen freien Ende desselben, getragen wird, wobei das Kugelgelenk (132) vorzugsweise über das Stützkreuz (131) hinausragt und vorzugsweise einen Teil (132a) zur Kopplung mit dem Stützkreuz (131) umfasst, der ein Kugelscharnier definiert, um durch Reibung ein Ende eines entsprechenden Teils (132b) zu bewegen, der die Aufnahmemittel (14) trägt.

8. Vorrichtung nach einem der vorhergehenden Ansprüche, **dadurch gekennzeichnet, dass** das Basiselement bzw. Stützelement am Boden (120) einen Basisrahmen (121) umfasst, aus dem sich das Hubelement (13) erstreckt, und einen Rahmen (122), der relativ zum Basisrahmen (121) beweglich ist, wobei der bewegliche Rahmen (122) verschiebbar durch den Basisrahmen (121) gestützt wird und Mittel (20) zum Stützen des dreidimensionalen Objekts trägt.

9. Vorrichtung nach Anspruch 8, **dadurch gekennzeichnet, dass** die zweiten Mittel zum Tragen des dreidimensionalen Objekts (20) in Bezug auf den beweglichen Rahmen (122) des Basiselements oder des Stützelements am Boden (120), beweglich sind.

10. Vorrichtung nach einem der vorhergehenden Ansprüche 8 und 9, **dadurch gekennzeichnet, dass** der gegenüber dem Basisrahmen (121) bewegliche Rahmen (122) in einer jeweiligen Betriebsposition (11, 12, 13 14) an diesem festlegbar ist, und kann hierdurch entriegelt werden, um die Relativbewegung in eine andere Betriebsposition unter Verwendung entsprechender Koppel- und Entkopplungsmittel durchzuführen, die insbesondere über entsprechende Mittel mit Drehknöpfen (121m) betätigt werden, und/oder wobei die Mittel zur Abstützung des dreidimensionalen Objekts (20) gegenüber dem beweglichen Rahmen (122) des Basiselements bzw. des Auflageelements (120) in einer jeweiligen Betriebsposition (11, 12, 13 14) fixierbar sind, wobei zur Durchführung der Relativbewegung zu einer anderen Betriebsposition hin sind sie entriegelbar über entsprechende Koppel- und Entkopplungsmittel, die insbesondere über entsprechende Drehknöpfe (22m) betätigt werden.

11. Vorrichtung nach einem der vorhergehenden Ansprüche, **dadurch gekennzeichnet, dass** die ersten Stützmittel (12) zumindest einen Translationsfreiheitsgrad (G5), insbesondere sowohl in Vorwärts- als auch in Rückwärtsrichtung, der Aufnahmemittel (14), im Vergleich zum entsprechenden Kugelgelenk (132), ermöglichen.

12. Vorrichtung nach einem der vorhergehenden Ansprüche, **dadurch gekennzeichnet, dass** die ersten Stützmittel (12) mindestens einen Rotationsfreiheitsgrad (G6) der Stützfläche (22) des dreidimensionalen Objekts entsprechend einer Achse (T) ermöglichen, die transversal oder horizontal in Bezug auf die Stützmittel (12), d. h. in Bezug auf die Aufnahmemittel (14), umfassen, und insbesondere der Rotationsfreiheitsgrad (G6) der Stützfläche (22) des dreidimensionalen Objekts entsprechend einer Achse (T), die transversal oder horizontal in Bezug auf die Trägermittel (12), d. h. in Bezug auf die Stützmittel (12), d. h. in Bezug auf die Aufnahmemittel (14), nach beiden entgegengesetzten winkeligen Richtungen, drehend ist.

13. Vorrichtung nach einem der vorhergehenden Ansprüche, **dadurch gekennzeichnet, dass** die ersten Stützmittel (12) mindestens einen Grad an transversaler oder horizontaler Freiheit (GO), insbesondere in beiden Richtungen nach links und nach rechts, zwischen den Aufnahmemitteln (14) und der Oberfläche (22) zur Fixierung des dreidimensionalen Objekts, d. h. zwischen den Aufnahmemitteln (14) und dem Basiselement (120) und/oder dem Hebeelement (14), aufweist, wobei die transversale Translation insbesondere dazu bestimmt ist, um die Zentrierung der optischen Achse der Videokamera (16) des Aufnahmemittels (14) in Bezug auf die Oberfläche zum Tragen und Fixieren des dreidimensionalen Objekts, zu definieren.

14. Vorrichtung nach einem der vorhergehenden Ansprüche, **dadurch gekennzeichnet, dass** das Hubelement (13), das die Mittel (14) zum Scannen des dreidimensionalen Objekts trägt, gegenüber dem Basiselement oder dem Stützelement am Boden (120), Stützmittel (20) zum Stützen des dreidimensionalen Objekts aufweist, mit mindestens einem Freiheitsgrad (G8), um das Hubelement (13) in der Stützposition, insbesondere in der Transportposition der Vorrichtung, zu positionieren , wobei insbesondere der Freiheitsgrad (G8) für die Positionierung des Hubelements (13) in der Stützposition, insbesondere in der Transportposition der Vorrichtung, durch eine Relativdrehung zwischen dem Hubelement (13) und das Basiselement oder das Stützelement am Boden (120), vorzugsweise in einem Winkel von praktisch gleich 90°, definiert ist und/oder insbesondere aufgrund der Tatsache, dass es sich in der Stützposition, insbesondere in der Transportposition der Vorrichtung befindet, und wobei das Element, das die Mittel (14) zum Scannen des dreidimensionalen Objekts trägt, über dem Basiselement oder dem Stützelement am Boden (120) positioniert ist.

15. Vorrichtung nach einem der vorhergehenden Ansprüche, **dadurch gekennzeichnet, dass** der Freiheitsgrad (G7) zwischen den Mitteln bzw. der Videokamera (16) zur Aufnahme von Bildern des dreidimensionalen Objekts und den Projektionsmitteln bzw. Projektoren (18), eine transversale oder horizontale Bewegung weg oder hin, insbesondere des Erfassungsmittels, oder der Videokamera (16), in Bezug auf das Projektionsmittel, oder Projektor (18), umfasst, und/oder eine Winkeldrehung entsprechend einer senkrechten oder vertikalen Achse, insbesondere des Erfassungsmittels bzw. der Videokamera (16) in Bezug auf das Projektionsmittel bzw. Projektor (18), und/oder eine Winkeldrehung entsprechend einer jeweiligen Querachse des Erfassungsmittels bzw. Videokamera (16), insbesondere definiert durch eine jeweilige horizontale Achse, und insbesondere in Form einer winkeligen Drehung des Erfassungsmittels bzw. der Videokamera (16) gegenüber dem Projektionsmittel bzw. Projektor (18).

## Revendications

1. Dispositif (10) pour scanner un objet tridimensionnel respectif comprenant des premiers moyens de support (12) pour supporter des moyens correspondants (14) pour scanner l'objet tridimensionnel et des deuxièmes moyens (20) pour supporter l'objet tridimensionnel, le lesdits deuxièmes moyens (20) comprenant une surface correspondante (22) pour fixer l'objet tridimensionnel, lesdits premiers moyens de support ayant la forme d'un corps respectif (12) configuré pour supporter à la fois les moyens (14) pour scanner l'objet tridimensionnel et les moyens (20) pour supporter l'objet tridimensionnel, ledit corps (12) des moyens de support comprenant un élément (120), tel qu'une base ou pour reposer sur le sol, qui est configuré pour supporter les deuxièmes moyens (20) pour supporter l'objet tridimensionnel, le dispositif comprenant en outre un élément de levage (13) configuré pour porter les moyens (14) pour scanner l'objet tridimensionnel, dans lequel l'élément de levage (13) s'étend depuis ledit élément (120), et lesdits premiers moyens de support ou le corps (12) permettant à la surface (22) de fixer à l'objet tridimensionnel avec un degré de liberté de rotation (G1) par rapport à un axe (R) perpendiculaire à la surface de support (22) et/ou à l'élément de base (120) du moyen de support ou du corps (12), lesdits moyens (14) pour scanner l'objet tridimensionnel comprenant des moyens, ou une caméra vidéo (16) de capture d'images de l'objet tridimensionnel et des moyens, ou un projecteur (18) pour projeter un rayonnement électromagnétique correspondant destiné à se réfléchir, au moins partiellement, sur l'objet tridimensionnel, les premiers moyens de support (12) étant configurés pour permettre aux moyens (14) pour scanner l'objet tridimensionnel, au moins un degré de liberté de translation (G2) perpendiculaire ou vertical, de préférence le long de l'élément de levage (13), selon les directions soit levage et d'abaissement, par rapport à l'élément de base (120), c'est-à-dire par rapport à la surface (22) pour fixer l'objet tridimensionnel, les premiers moyens de support (12) étant configurés pour définir en outre au moins un degré de liberté de translation longitudinale (G4), selon des directions longitudinales tournés vers l'avant et vers l'arrière, des deuxièmes moyens (20) pour supporter l'objet tridimensionnel, notamment la surface respective (22) pour fixer ce dernier, par rapport aux moyens de balayage (14), c'est-à-dire par rapport au support de l'élément de levage (13) pour supporter ce dernier, **caractérisé en ce que** les moyens de support (12) sont en outre configurés pour permettre au moins un degré de liberté (G7) entre les moyens, ou une caméra vidéo (16) pour capturer des images de l'objet tridimensionnel, et les moyens de projection, ou le projecteur (18), et notamment des moyens de détection, ou une caméra vidéo (16), par rapport aux moyens de projection, ou à un projecteur (18).

2. Dispositif selon la revendication 1, **caractérisé en ce que** l'élément de levage a la forme d'une colonne correspondante (13) qui se développe verticalement par rapport à l'élément de base, c'est-à-dire perpendiculairement par rapport à l'élément de cadre (120), s'étendant de préférence vers une zone d'extrémité longitudinale, et de préférence un bord, de l'élément de base ou de l'élément de cadre (120).

3. Dispositif selon l'une des revendications précédentes, **caractérisé en ce que** le degré de liberté de rotation (G1) par rapport à l'axe perpendiculaire (R), sur la surface d'appui (22) et/ou l'élément de base (120) du premier moyen de support ou corps (12), permet une rotation d'au moins 360°, notamment une rotation continue selon au moins une direction angulaire.

4. Dispositif selon l'une des revendications précédentes, **caractérisé en ce que** les deuxièmes moyens (20) pour supporter l'objet tridimensionnel comprennent une table rotative (201), qui définit, avec la surface supérieure respective, la surface d'appui (22) de l'objet tridimensionnel, la table rotative (201) étant supporté par une pièce de support correspondante (202), notamment en forme de table correspondante fixe en rotation et notamment disposée en dessous de la table rotative (201), et en en particulier, la pièce de support (202) supporte des moyens de rotation de la table rotative (201), notamment accrochés en dessous et de préférence avec la forme d'un moteur électrique respectif (203) pour entraîner la table rotative (201) .

5. Dispositif selon l'une des revendications précédentes, **caractérisé en ce que** les moyens (14) pour scanner l'objet tridimensionnel peuvent être positionnés selon le degré de liberté (G2) perpendiculaire, ou vertical, dans une pluralité de positions de fonctionnement préétablies, comprenant notamment une position basse (h1), une position haute (h3 ou h4), et au moins une position intermédiaire (h2) entre elles, notamment dans une première et deuxième position intermédiaire entre elles (h2 et h3), de préférence en nombre égal à trois ou quatre positions opératives préétablies.

6. Dispositif selon l'une des revendications précédentes, **caractérisé en ce que** les premiers moyens de support (12) comprennent une traverse (131) pour supporter les moyens de balayage (14), notamment pour supporter les moyens de détection (16) et/ou les moyens de projection (18), la traverse (131) coulissant perpendiculairement ou verticalement sur l'élément de levage, ou colonne (13), et qui peuvent être verrouillés sur ce dernier par des moyens d'accouplement et de désaccouplement respectifs avec ce dernier, qui sont notamment actionnés par des moyens respectifs avec des boutons (131m).

7. Dispositif selon l'une des revendications précédentes, **caractérisé en ce que** les premiers moyens de support (12) permettent aux moyens (14) pour scanner l'objet tridimensionnel, au moins un degré de liberté de rotation sphérique (G3), notamment par rapport à la traverse de support (132), c'est-à-dire par rapport à la surface (22) pour fixer l'objet tridimensionnel, et notamment que le degré de liberté de rotation sphérique (G3) est défini par une articulation sphérique correspondante (132) qui supporte les moyens de balayage (14), en particulier lorsque l'articulation sphérique (132) est supportée par la traverse de support (131), notamment sur une extrémité libre respective de celle-ci, l'articulation sphérique (132) dépassant de préférence au-dessus de la traverse (131) et comprenant de préférence une pièce (132a) d'accouplement avec la traverse (131) et qui définit une charnière sphérique pour déplacer par friction une extrémité d'une pièce correspondante (132b) qui porte les moyens de balayage (14).

8. Dispositif selon l'une des revendications précédentes, **caractérisé en ce que** l'élément de base, ou élément d'appui au sol (120), comprend un cadre de base (121), à partir duquel se développe l'élément de levage (13), et un cadre (122) mobile par rapport au cadre de base (121), le cadre mobile (122) étant supporté de manière coulissante par le cadre de base (121) et portant le moyen (20) pour supporter l'objet tridimensionnel.

9. Dispositif selon la revendication 8, **caractérisé en ce que** les deuxièmes moyens de support de l'objet tridimensionnel (20) sont mobiles par rapport au cadre mobile (122) de l'élément de base, ou élément d'appui au sol (120) .

10. Dispositif selon l'une des revendications précédentes 8 et 9, **caractérisé en ce que** le cadre (122) mobile par rapport au cadre de base (121) peut être verrouillé à ce dernier, dans une position de fonctionnement respective (11, 12, 13, 14) et peut être déverrouillé par celui-ci, pour effectuer le mouvement relatif vers une position de fonctionnement différente, à l'aide de moyens de couplage et de découplage correspondants, qui sont notamment actionnés par des moyens respectifs à boutons (121m), et/ou dont les moyens de support de l'objet tridimensionnel (20) peuvent être verrouillés par rapport au cadre mobile (122) de l'élément de base, ou élément d'appui au sol (120), dans une position de fonctionnement respective (11, 12, 13 14), et peut ainsi être déverrouillé, pour effectuer le mouvement relatif vers une position de fonctionnement différente, à l'aide de moyens de couplage et de découplage correspondants, qui sont notamment actionnés par des moyens respectifs à boutons (22m).

11. Dispositif selon l'une des revendications précédentes, **caractérisé en ce que** les premiers moyens de support (12) permettent au moins un degré de liberté de translation (G5), notamment selon des directions tournées vers l'avant et vers l'arrière, des moyens de balayage (14) par rapport à la table rotative correspondante (132).

12. Dispositif selon l'une des revendications précédentes, **caractérisé en ce que** les premiers moyens de support (12) permettent au moins un degré de liberté de rotation (G6) de la surface de support (22) de l'objet tridimensionnel, selon un axe (T) transversal ou horizontal, par rapport aux moyens de support (12), c'est-à-dire par rapport aux moyens de balayage (14), et notamment le degré de liberté de rotation (G6) de la surface de support (22) de l'objet tridimensionnel selon un axe (T) transversal ou horizontal par rapport aux moyens de support (12), c'est-à-dire par rapport aux moyens de balayage (14), par une rotation selon des directions angulaires mutuellement opposées.

13. Dispositif selon l'une des revendications précédentes, **caractérisé en ce que** les premiers moyens de support (12) permettent au moins un degré de liberté transversale ou horizontale (GO), notamment selon les deux directions vers la gauche et vers la droite, entre les moyens de balayage (14) et la surface (22) de fixation de l'objet tridimensionnel, c'est-à-dire entre les moyens de balayage (14) et l'élément de base (120) et/ou l'élément de levage (14), la translation transversale étant notamment destinée à définir le centrage de l'axe optique de la caméra vidéo (16) des moyens de balayage (14) par rapport à la surface de support et de fixation de l'objet tridimensionnel.

14. Dispositif selon l'une des revendications précédentes, **caractérisé en ce que** l'élément de levage (13) qui porte les moyens (14) pour scanner l'objet tridimensionnel, présente par rapport à l'élément de base ou à l'élément d'appui au sol (120), des moyens de support (20) pour supporter l'objet tridimensionnel, avec au moins un degré de liberté (G8) pour positionner l'élément de levage (13) en position de support, notamment en position de transport du dispositif, notamment le degré de liberté (G8) pour le positionnement de l'élément de levage (13) en position de repos, notamment en position de transport du dispositif étant défini par une rotation relative entre l'élément de levage (13) et l'élément de base, ou élément d'appui au sol (120), de préférence selon un angle pratiquement égal à 90°, et/ou notamment **en ce qu'**en position de repos, notamment en position de transport du dispositif, l'élément portant les moyens (14) pour scanner l'objet tridimensionnel est positionné au-dessus de l'élément de base, ou élément d'appui au sol (120).

15. Dispositif selon l'une des revendications précédentes, **caractérisé en ce que** le degré de liberté (G7) entre les moyens ou la caméra vidéo (16) de capture d'images de l'objet tridimensionnel et les moyens de projection, ou projecteur (18), comprend un mouvement transversal ou horizontal d'éloignement ou de rapprochement, notamment des moyens de détection, ou de la caméra vidéo (16), par rapport au moyen de projection, ou projecteur (18), et/ou une rotation angulaire selon un respective axe perpendiculaire ou vertical, notamment du moyen de détection, ou caméra vidéo (16) par rapport au moyen de projection, ou projecteur (18), et/ou une position angulaire selon un axe transversal respectif du moyen de détection, ou caméra vidéo (16), notamment définie par un axe horizontal respectif, et notamment sous la forme d'une rotation angulaire du moyen de détection, ou caméra vidéo (16), par rapport au moyen de projection, ou projecteur (18).
